# EUROPEAN PATENT APPLICATION

(11) **EP 2 869 148 A1**
(43) Date of publication of application: **06.05.2015**
(21) Application number: 14191571.0
(22) Date of filing: 04.11.2014
(51) Int. Cl.: G05B 19/042

(54) **Control device**

(30) Priority: 05.11.2013 JP 2013229656
(71) Applicant: OMRON CORPORATION, Kyoto, Kyoto 600-8530 (JP)
(72) Inventor: Kawanque, Shinsuke, Kyoto, Kyoto 600-8530 (JP); Kuribayashi, Hiroshi, Kyoto, Kyoto 600-8530 (JP)
(74) Representative: Horn Kleimann Waitzhofer

(57) **Abstract**

To reduce the processing load of the control calculations run on a PLC while quickly providing data representing a state of control, a PLC for communicating data with an external device executes a user program to manage a controlled object. The user program executes a program that monitors data representing a state of control, which can be referenced or updated. When a monitoring condition is met, the monitoring program transmits a data message representing the state of control via a server to the external device using a PUSH-type protocol.

## Description

### FIELD

The present invention relates generally to a control device and program such as a programmable logic controller (PLC), and more specifically relates to control device and program posts information regarding the control device to an external device such as a server or a mobile terminal.

### BACKGROUND

The controllers such as PLCs used to control the automated machinery in factories and the like include input and output functions. For instance, a PLC consecutively reads the values output from a sensor and the like, carries out control computations, and outputs the results of the control computations to manage a controlled object.

Japanese Unexamined Patent Application Publication No. 2006-99809 describes a system provided with a PLC and a server configured such that the server sends the PLC a data transmission request, and the PLC transmits data representing the state of control saved in PLC to the server in response to the request from the server. As further exemplified in Japanese Unexamined Patent Application Publication No. 2006-99809 the data sent from the PLC representing the state of control can be accessed on the server via another device such as a personal computer.

As exemplified in Japanese Unexamined Patent Application Publication No. H11-249717, the PLC may have a built-in web server. The web server installed on the PLC can be accessed through a network via a device such as a personal computer to access the data in the PLC.

It is also known that typically, the control program a user creates (referred to below as a user program) describes the conditions under which the PLC sends data to a device such as the server. The PLC executes the user program to send the data saved on the PLC representing the state of control to a personal computer or a server connected to the PLC via a network.

### Technical Problem

A user wishing to reference data indicating the operation of the device usually desires to reference the data indicating the operation or malfunction of the device in real-time. The data stored in the PLC indicating the operation of the device may be used in various situations such as for causal analysis when the device malfunctions, to understand the operations of the device, to protect or service the device and the like; however, the data the user desires to reference may be different depending on the situation.

Within the context of the conventional features described in Japanese Unexamined Patent Application Publication No. 2006-99809 and Japanese Unexamined Patent Application Publication No. H11-249717, attempting to provide the user with the data stored in the PLC in real-time results in an increase in data requests from the server to the PLC. This increases the processing load on the PLC managing the device.

Additionally, if the conditions for transmitting data or the frequency for transmitting data is coded into the user program or provided as the initial settings in the PLC, then the user program must be revised or a tool connected to the PLC to change the settings in the PLC.

To address the above described problems herein is proposed a PLC that reduces the processing load of control calculations run on the PLC while the PLC may quickly provide data indicating the state of control.
Additionally, the PLC proposed herein may also facilitate the updating of the type of data and the condition under which the data is sent from the PLC indicating the state of control.

### SUMMARY

A control device according to a first embodiment is provided with a microprocessor, a user program for managing a controlled device, a variable associated with the user program, a storage unit used to store a monitoring program, and a communication unit that transmits and receives data via a network.

The monitoring program includes a program that establishes communications with an external device via the communication unit; a program for accessing the storage unit and reading a value for a variable therefrom; and a program for initiating a transmission to the external device with which communications is established via the communication unit using a PUSH-type protocol. The microprocessor repeatedly executes the user program and updates the value of the variable stored in the storage unit, and executes the monitoring program to transmit a data message to the external device with which communications is established including the value of the variable read via the PUSH-type protocol.

The storage unit may store a condition data describing a condition under which the variable is transmitted to the external device. The monitoring program may further include a program that identifies the variable that matches the condition data with respect to the value of the variable read. The microprocessor runs the monitoring program to transmit a data message regarding the identified variable.

The storage unit may store a condition data describing a condition under which the variable is sent to the external device. The monitoring program further includes a program for analyzing a message received from the external device with which communications is established, and a program for storing a condition data in the storage unit when the condition data is stored in a received message. The microprocessor executes the monitoring program to register the condition data in the storage unit.

### Effects

The control device according to the first embodiment is configured to use a PUSH-type protocol to transmit data. The control device thus reduces the communication overhead and the processing load of the control calculations in addition to providing high-speed data transmission.

### BRIEF DESCRIPTION OF THE DRAWINGS

FIG. 1 illustrates an overall configuration of the system;
FIG. 2 illustrates a configuration of the hardware blocks in the PLC;
FIG. 3 is a block diagram illustrating functions in the PLC;
FIG. 4 is a block diagram illustrating functions in the server;
FIG. 5 illustrates the execution timing for a monitoring program;
Figures 6A through 6C illustrate an example of the data stored in the PLC;
Figures 7A and 7B illustrate an example of the data stored in the server;
Figures 8A through 8C are flowcharts illustrating the operations of the PLC;
Figures 9A and 9B are flowcharts of the operations of the server;
FIG. 10 illustrates an example of a data message transmitted in the first embodiment;
Figures 11A through 11C illustrate examples of a display presented on a mobile terminal.

### DETAILED DESCRIPTION

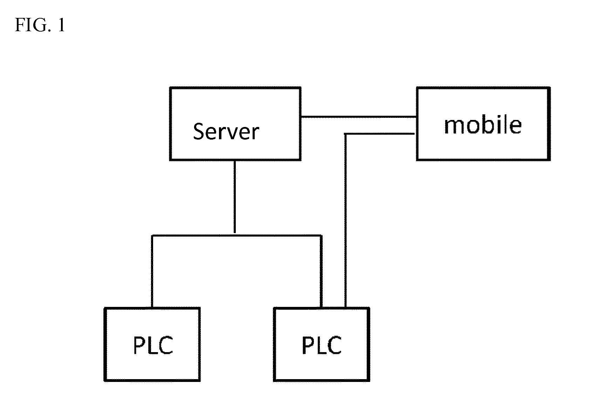

FIG. 1 illustrates an overall system configuration of the first embodiment. The overall configuration of the system is described with reference to FIG. 1. The system includes a PLC, a server, and a mobile terminal.

The PLC is connected to the server or the mobile terminal via a network; the PLC is configured to send and receive data.

The PLC includes an input and an output function. The PLC sequentially reads in the data output from a controlled device such as a sensor or a motor (not shown), executes control calculations, and outputs the control calculations to thereby manage the controlled device.

The PLC executes a later described monitoring program to monitor the state of control. Furthermore, the PLC executes a management program to transmit data to the server or the mobile terminal using a PUSH-type protocol. The data represents a state of control, which includes the state of the controlled device, or state of the device hosting the PLC.

The server is connected to the PLC and the mobile terminal via the network. The server is configured to send data to and receive data from the PLC and the mobile terminal. The server stores the data sent from the PLC or the mobile terminal. Additionally, the server is configured to transmit the data received from the PLC or the mobile terminal to the PLC or the mobile terminal, and acts as a relay between the mobile terminal and the PLC to transmit data.

The mobile terminal is connected to the PLC or the server via the network. The mobile terminal is configured to transmit and receive data to and from the PLC or the server. The mobile terminal includes an application that operates on the mobile terminal. The application accepts data that is sent from the PLC or the server representing the state of control, and includes functions for displaying information on the screen, accepting input from the user, and transmitting the data that is input to the PLC or the server.

The network connecting the PLC, the server, and the mobile terminal may be wired or wireless. If a wireless network is used for transmitting and receiving data, the PLC, the server, and the mobile terminal may be provided with a wireless communication interface.

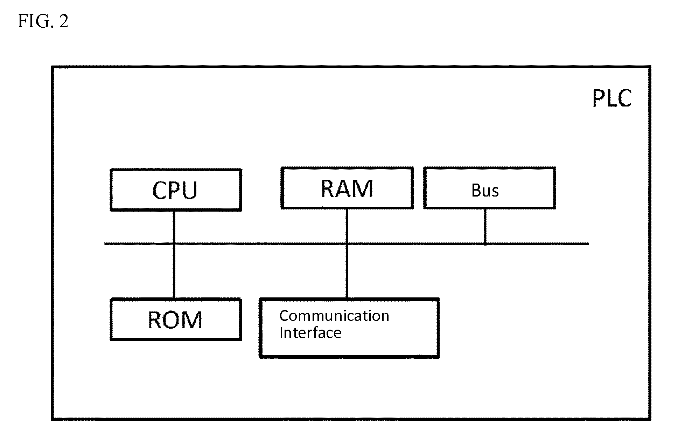

FIG. 2 illustrates the hardware blocks in the first embodiment. The PLC is provided with a CPU, a ROM, a RAM, a communication interface, a bus, and the like. The RAM is a volatile memory that stores a plurality of variables, and the like, as well as the user program. The communication interface allows communication with an external device.

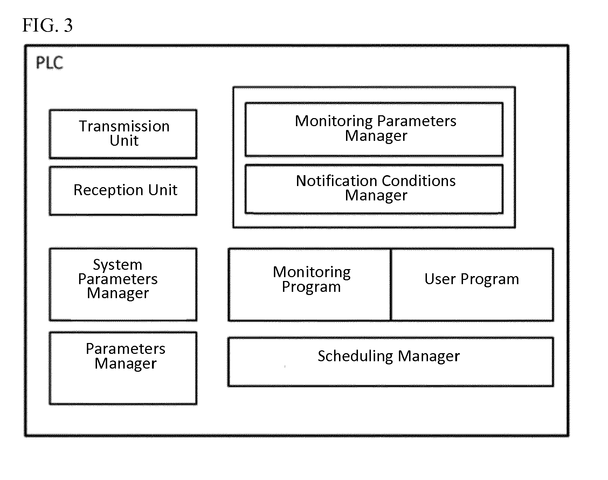

FIG. 3 is a block diagram of the functions in the PLC according the first embodiment.

The PLC periodically executes the user program. The PLC reads and writes data into a parameter manager, and sequentially executes the commands described in the user program.

The user program is a user created program that executes control calculations.

The monitoring program includes a function for monitoring the state of control of the PLC, a function for establishing communications with the server or the mobile terminal, and a function for transmitting data messages via a PUSH-type protocol.

The scheduling manager controls the timing for executing a program. The user program, an input-output (I/O) program, and the monitoring program all have controlled execution times. The I/O program acquires data output from a controlled device such as a sensor or a motor (not shown), and outputs the results of the control calculations to the controlled device.

A parameter manager stores a variable list including a variable name, a data type, and a value for a plurality of variables, which may be referenced, or output while the user program is running. A variable includes input data that is entered from a controlled device such as a sensor or motor, results of the control calculations executed by the user program, and data representing a state of control.

A system parameters manager stores system parameters, which have no relation to the user program. The system parameters may include information on the PLC model number and the PLC operation uptime.

A monitoring parameters manager stores at least a monitoring parameter and a monitoring parameter name; the monitoring program may reference the monitoring parameters manager. The monitoring parameters manager includes information representing the parameters being monitored among the plurality of variables stored in the parameters manager and the system parameters stored in the system parameters manager.

A notification conditions manager stores at least a condition ID, a variable name, and a conditional operator; the monitoring program may reference the notification conditions manager. The notification conditions manager includes information representing the conditions under which the value of the variable should be provided in a notification.

The transmission unit and the reception unit are connected to the server or the mobile terminal via a wired network or a wireless network and transmit and receive data respectively. The reception unit includes a function for interpreting a data message sent from the server or from the mobile terminal. The transmission unit includes a function for generating a data message and sending the generated message to the server or the mobile terminal.

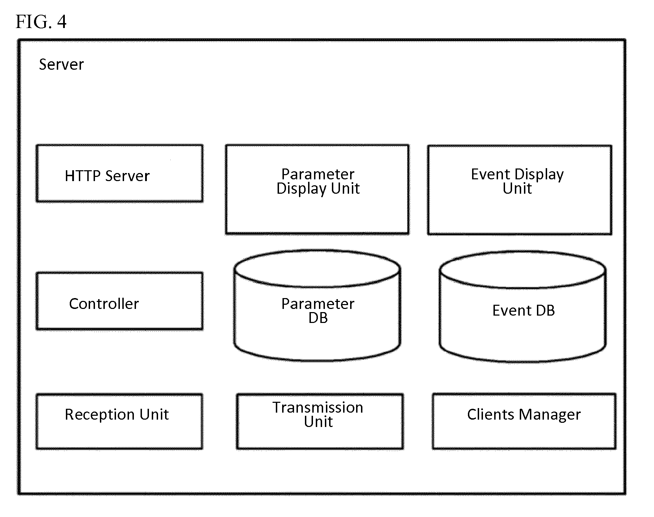

FIG. 4 is a block diagram representing the functions of the server in the first embodiment.

The controller is software that controls the sending, receiving, and storage of the data. A parameter DB stores at least system parameters, as well as data representing a plurality of variables in association with data identifying a PLC. The plurality of variables represents the state of control in the PLC. Furthermore, the controller is configured to reference the parameter DB.

A parameter display unit includes a function that presents the system parameters stored in the parameter DB, and the data representing the plurality of variable names.

An event DB stores an events list posted by the PLC. The event list stores data identifying the PLC in which the event occurred, the type of event that occurred, and a time when the event occurred.

The event display unit includes a function for displaying an event list that is stored in the event DB.

A client manager is connected to the server and includes information identifying the mobile terminal to which the data will be posted.

The transmission unit and the reception unit are connected to the server or the mobile terminal via a wired network or a wireless network and transmit and receive data respectively. The reception unit includes a function for interpreting a data message sent from the server or from the mobile terminal. The transmission unit includes a function for generating a data message in accordance with the protocol used for transmission to the server or the mobile terminal, and sending the generated message to the server or the mobile terminal.

An HTTP server transmits the data stored in the parameter manager and the event manager using the HTML protocol when the server receives a data transmission request.

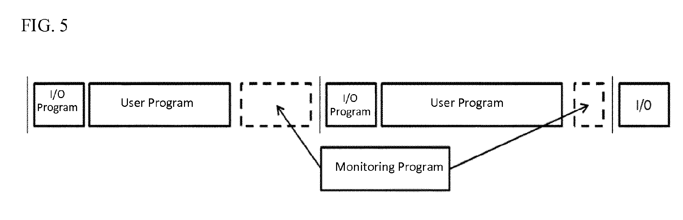

FIG. 5 is for explaining the execution timing for the monitoring program. The scheduling manager repeatedly executes an I/O program and a user program; the I/O program acquires input data from the controlled device and converts the output data, which are the control calculations.

The scheduling manager controls the monitoring program so that the monitoring program is run during the idle time between the execution of the I/O program and the user program. In the present example, the I/O program and the user program are repeatedly executed at in fixed cycles. If the execution of the monitoring program is not complete during the idle time between the cycles, then the processing of the monitoring program may be suspended in order that processing of the monitoring program restarts at the unprocessed portions of the monitoring program during the idle time for the next cycle.

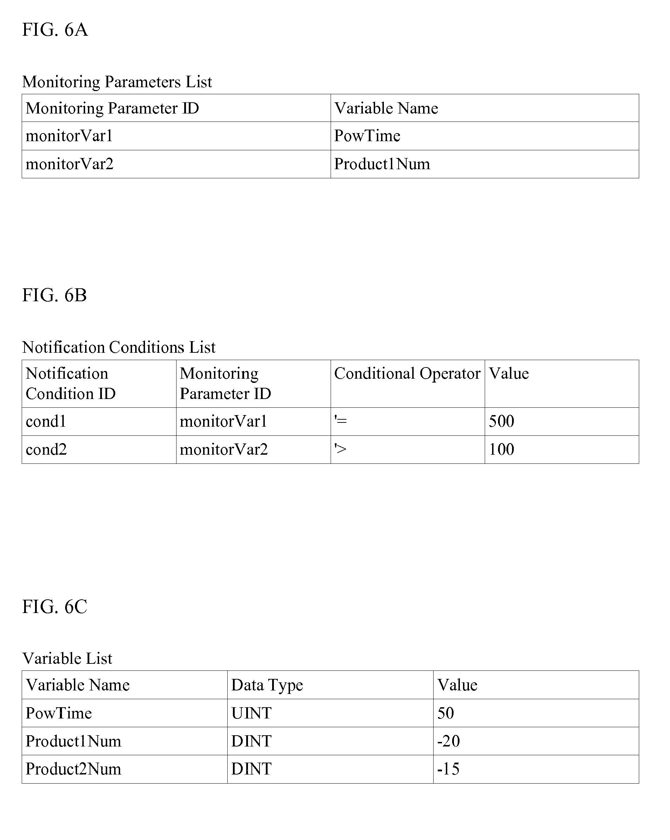

FIGS. 6A through 6C illustrate the data stored in the PLC. FIG. 6A is an example of the monitoring parameters list stored in the monitoring parameters manager. The monitoring parameters list stores the data identifying a monitored parameter represented by a monitoring parameter ID such as "Monitor Varl" in association with the monitoring parameters represented by variable names such as "PowTime", "Product1Num", and "Product2Num".

FIG. 6B is one example of the notification conditions list stored in the notification conditions manager. The notification conditions list stores data identifying a notification condition represented by a notification condition ID such as "cond1" in association with a monitoring parameter ID represented by "monitor Var1", the conditional operator represented by the "=" and the value for the condition represented by "500" as the notification condition.

FIG. 6C illustrates an example of the variable list stored in the parameters manager. A variable name such as represented by "PowTime" is stored in association with a data type such as "UINT" and the current value of the variable such as "50".

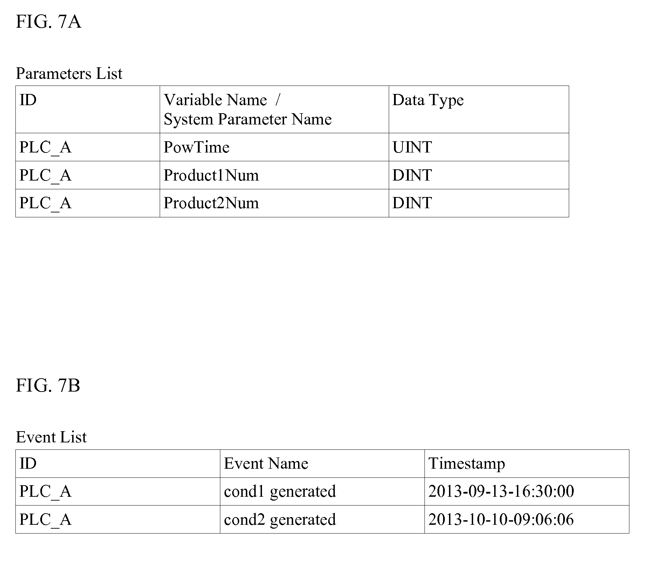

FIGS. 7A and 7B illustrate the data stored in the server. FIG. 7A is an example of the parameters list stored in the parameter DB. The parameter list stores information identifying the PLC as an object saved on the server as illustrated by "PLC A" in association with data representing the variable name such as "PowTime", and the data representing the data type of the variable such as "UINT".

FIG. 7B is an example of the event list stored in the event DB. The event list stores data identifying a target device where an event occurred as illustrated by "PLC_A" in association with data related to the event that occurred such as "cond1 generated" and the like, and data representing the time when the event occurred such as 2013/9/25 17:55:06.

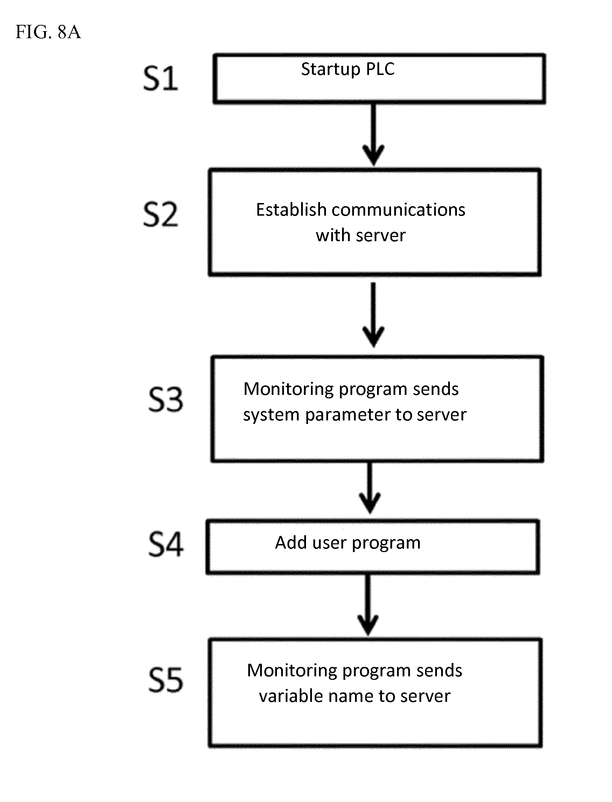

FIGS. 8A through 8C are flowcharts describing the operations of the PLC during execution of the monitoring program. FIG. 8A is a flowchart representing the operations carried out when the CPU runs the monitoring program when the PLC starts up.

The PLC starts up during step S1. In step S2, the monitoring program establishes communications with the server, to ensure that data can be transmitted to and received from the server. The monitoring program transmits a command to the server for establishing communications via the transmission unit, and receives a response from the server via the reception unit.

The web socket protocol maybe used as the communication protocol. Data messages indicating the state of control of the PLC may be transmitted from the PLC to the server or to the mobile terminal using this web socket protocol. Furthermore, data representing the state of control in the PLC may be verified in real-time using a browser on the mobile terminal when communication is carried out using this web socket protocol.

Once communications with the server is established to enable the transmission and reception of data, in step S3 the monitoring program uses a PUSH-type protocol to transmit data to the server. In step S3 the monitoring program references the system parameters manager and transmits a list of system parameter names stored therein to the server as a data message via the transmission unit.

In step S4, the user program and the variable list used by the user program are downloaded from, for example, a personal computer (not shown) onto the PLC, and the variable list stored in the parameter manager.

In step S5, the monitoring program references the parameter manager, and transmits the variable list to the server as a data message via the transmission unit.

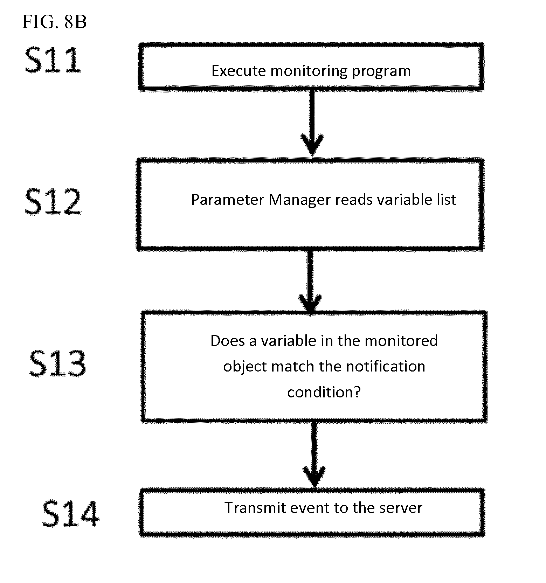

FIG. 8B is a flow chart illustrating the event notification process carried out when the CPU executes the monitoring program. The I/O program and the user program executed in the PLC input data to and output data from the external device such as a sensor or a motor, and execute the control calculations respectively. The scheduling manager starts the monitoring program.

Once the scheduling manager starts up the monitoring program in step S11, in step S12, the monitoring program reads the variable list storing the variable names and the current values thereof from the parameter manager.

In step S13, the monitoring program references the monitoring parameter list stored in the monitoring parameters manager, and the notification conditions list stored in the notification conditions manager, and determines whether the current values of the variables in the variable list read in step S12 match a notification condition.

If the monitoring program determines in step S13 that there is a match of the notification condition, in step S 14 the monitoring program will transmit a data message via the transmission unit using the PUSH-type protocol.

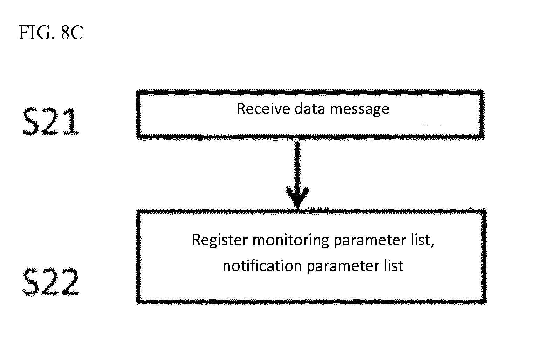

FIG. 8C is a diagram for explaining the operations of the monitoring program while registering a monitoring parameter list, and a notification condition list when the monitoring program receives a data message from the server.

In step S21, the monitoring program analyzes the data message on receiving the data message from the server, and determines whether a monitoring parameter list, or a notification condition list is included in the data message and is to be registered.

In step S21, if the monitoring program determines a monitoring parameter list is to be registered, the monitoring program stores the monitoring parameter ID, and the variable name of the monitored object included in the data message in the parameter manager.

Finally in step S21, if the monitoring program determines from the data message that there is a notification condition list to be registered, the monitoring program stores the notification condition ID, the monitoring parameter ID, the conditional operator, and the value of the condition in the notification conditions manager.

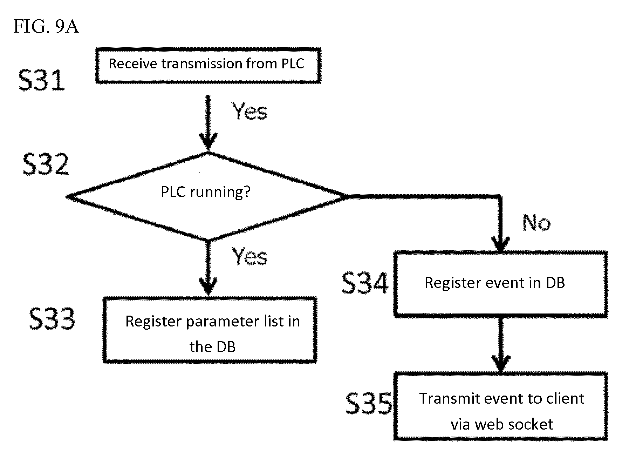

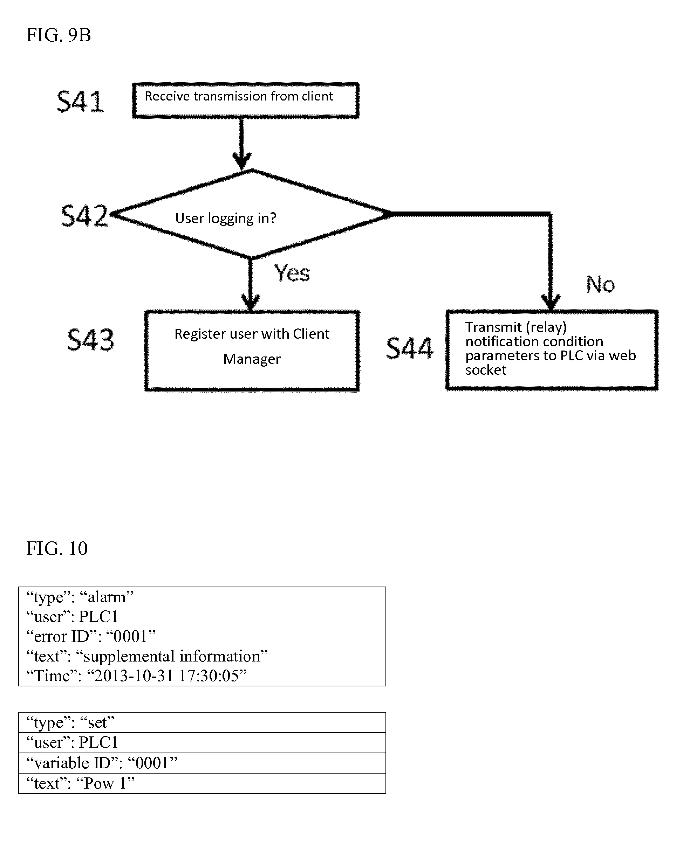

FIGS. 9A and 9B are flow charts describing the operations of the server. FIG. 9A illustrates the operations of the server when the server receives a data message from the PLC.

On receiving a data message from the PLC in step S31, the server determines in step S32 whether or not the data message was sent during the start up of the PLC. As an example, the server may interpret a status included with the data message when the data message was transmitted to determine whether or not the data was set during the startup of the PLC.

If in step S32 the server determines that the data message was sent during the startup of the PLC, the server registers the system parameter names or the variable list in the parameter DB.

If in step S32 the server determines that the data message was not sent during the startup of the PLC, the server determines that the data message is an event notification, and registers the notification condition ID, and the event timestamp in the event DB during step S34.

While the event is being registered in the event DB during step S34, the server references the client manager and transmits a data message including the notification condition ID and variable name, as well as a timestamp for the current value of the variable.

FIG. 9B illustrates the processes carried out when a mobile terminal logs in to the server.

In step S41, when the server receives a data message from the mobile terminal, in step S42, the server determines whether or not a user is logging in.

If in step S42 the server determines that the user is logging in, the server registers the user name with the client manager during step S43.

If in step S42 the server determines that the user is not logging in, the server determines that the data message is for registering a notification condition. In this case the server interprets the data message and transmits a monitoring parameter ID, the variable name for the monitored object, the notification condition ID, and the conditional operator to the PLC in a data message.

As described with reference to FIG. 8C, on receiving a data message from the server which includes notification condition parameters, the monitoring program in the PLC registers the data in the monitoring parameter list stored in the monitored object manager and in the notification condition list stored in the notification condition manager, respectively.

FIG. 10 illustrates an example of a data message transmitted to the server from the PLC.

The data message includes at least data representing the type of data message, data on the message sender, data representing the notification information, and text data. When the server or the PLC receives a data message, the server or the PLC determines the data type, posts the data, and stores the event.

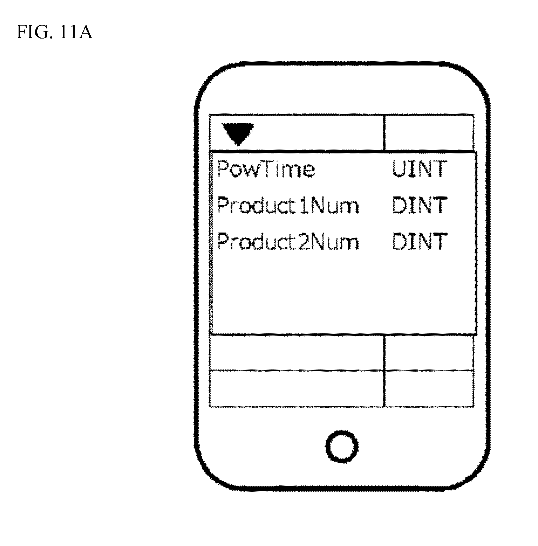

FIGS. 11A through 11C illustrate examples of the data displayed on the mobile terminal.

FIG. 11A is an example of the display used to present the variable list and the system parameters transmitted from the server on the mobile terminal. The processes required to display the example are executed continuously while the example is being displayed.

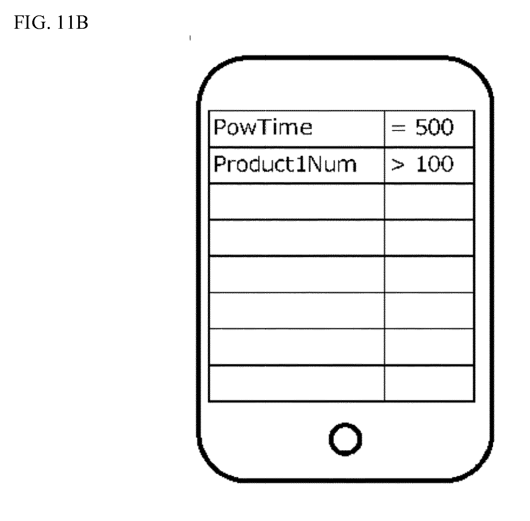

FIG. 11B is an example of the display presented on the mobile terminal when a user is setting the conditions under which to provide an event notification.

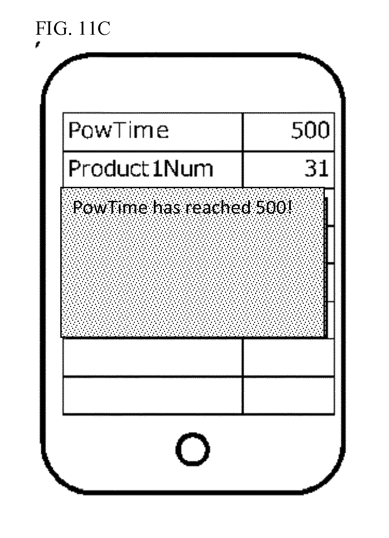

FIG. 11C is an example of a display presented when the mobile terminal receives a notification from the server.

## Claims

1. A control device for communicating with an external device via a network, the control device comprising:
a microprocessor;
a storage unit that stores a user program used to manage a controlled device, a variable associated with the user program, and a monitoring program; and
a communication unit that transmits and receives data via the network; wherein
the monitoring program includes:
a program for establishing communications with the external device via the communication unit;
a program for accessing the storage unit and reading a value of a variable therefrom; and
a program for causing the monitoring program to carry out a transmission with respect to the external device with which communications is established via the communication unit using a PUSH-type protocol; and
the microprocessor:
repeatedly executes the user program, and updates the value of the variable stored in the storage unit; and
executes the monitoring program to transmit a data message including the value of the variable read to the external device with which communications is established via a PUSH-type protocol.

2. The control device according to claim 1 wherein the storage unit stores condition data describing a condition under which the variable is transmitted to the external device; and
the monitoring program further includes a program that identifies the variable that matches the condition data with respect to the value of the variable read; and
the microprocessor executes the monitoring program and transmits a data message regarding the variable identified by the monitoring program.

3. The control device according to claim 1 wherein the storage unit stores condition data describing a condition under which the variable is transmitted to the external device; and
the monitoring program further includes:
a program for analyzing a data message received from the external device with which communications is established; and
a program which causes the storage unit to store a condition data when the condition data is included in the received data message; and
the microprocessor executes the monitoring program and registers the condition data in the storage unit.
